# EUROPÄISCHE PATENTSCHRIFT

(11) **EP 2 507 548 B1**
(45) Veröffentlichungstag und Bekanntmachung des Hinweises auf die Patenterteilung: **29.08.2018**
(21) Anmeldenummer: 10726480.6
(22) Anmeldetag: 16.06.2010
(51) Int. Cl.: F21V 29/00, F21K 99/00

(54) **RETROFIT LED-LAMPE**
RETROFIT LED LAMP
LAMP DEL POUR REEQUPMENT

(30) Priorität: 30.11.2009 DE 102009056115
(43) Veröffentlichungstag der Anmeldung: 10.10.2012
(73) Patentinhaber: Tridonic Jennersdorf GmbH, 8380 Jennersdorf (AT)
(72) Erfinder: BAKK, Istvan, H-2045 Törökbalint (HU)
(74) Vertreter: Rupp, Christian
(86) Internationale Anmeldenummer: PCT/EP2010/058476
(87) Internationale Veröffentlichungsnummer: WO 2011/063999

(56) Entgegenhaltungen:
- WO-A1-2009/071111
- DE-A1-102007 037 190
- DE-U1-202005 006 332
- DE-U1-202008 013 667
- US-A1- 2009 244 899

## Beschreibung

Die Erfindung behandelt eine LED-Lampe. Dabei konzentriert sie sich insbesondere auf sog. Retrofit LED-Lampen, die als Ersatz von Halogenlampen oder Glühlampen ausgestaltet sind.

Zur Beleuchtung werden immer häufiger LED-Lampen eingesetzt. Diese zeichnen sich durch ihre hohe Lichteffizienz und ihre Langlebigkeit aus. Des Weiteren können sie auf Grund ihrer äußerst geringen Abmessungen sehr flexibel eingesetzt werden. LEDs werden zumeist als LED-Module hergestellt. Dabei ist an LED-Module, bestehend aus mindestens einer blauen LED zu denken, das durch auf der LED angeordnetes Wellenlängenkonvertierungsmittel weißes Licht erzeugt. Mittels RGB-LED-Modulen lassen sich beliebige Farben erzeugen, wobei eine Einstellung und eine Dimmung über eine PWM-Ansteuerung der einzelnen Farbkanäle realisierbar ist.

Besonders bevorzugt werden LED-Lampen in der Form von sogenannten Retrofit LED-Lampen eingesetzt. Hierbei ist die LED-Lampe hinsichtlich ihrer mechanischen und elektrischen Anschlüsse zum Ersatz bestehender Leuchtmittel (Glühbirne, Halogen,...) ausgebildet,. Zur Anpassung des Versorgungsstroms weist die Retrofit LED-Lampe zudem üblicherweise eine eigene Treiberschaltung auf, die ausgehend bspw. von einer über den Sockel zugeführten Netzspannung den Versorgungsstrom an die Betriebsbedingungen der LEDs anpasst. Somit können die Retrofit LED-Lampen wie konventionelle Glühbirnen in gewöhnliche Lampenfassungen eingeschraubt werden und mittels des zugeführten Netzstroms betrieben werden.

Bei LEDs stellt sich indessen das Problem, dass die LED-Chips und/oder ihre Treiberschaltung im Betrieb Wärme erzeugen, die u.a. zu unerwünschten Veränderungen des emittierten Farbspektrums und zu einer geringeren Lebenszeit führen können. Dementsprechend ist es wichtig, eine effektive Kühlung der LED bereitzustellen. Auch für einen zuverlässigen Betrieb der Treiberschaltung der LED ist eine Kühlung vorteilhaft. Durch den Einsatz von LEDs in Retrofit LED-Lampen ist jedoch der Platz durch stark eingeschränkt, womit keine großen und dadurch leistungsstarken Kühlungen eingesetzt werden können. Daher ist es um so entscheidender, eine besonders effiziente Kühlung einzusetzen die auf geringem Platz eingesetzt werden kann und dabei trotzdem möglichst viel Wärme abführen kann.

In den Druckschriften US 2009/0244899 A1, DE 20 2005 006 332 U1, DE 10 2007 037 190 A1 und DE 20 2008 013 667 U1 sind verschiedene Kühlkörperanordnungen gezeigt.

Der Erfindung liegt also die Aufgabe zugrunde, eine effiziente und platzsparende Kühlkörperanordnung für eine LED-Lampe, insbesondere für eine Retrofit LED-Lampe bereitzustellen.

Die Aufgabe wird erfindungsgemäß durch die Merkmale der unabhängigen Ansprüche gelöst. Die abhängigen Ansprüche stellen vorteilhafte Weiterbildungen der Erfindung dar. Ein Aspekt der Erfindung betrifft eine Kühlkörper-Anordnung zur Ableitung der während des Betriebs an einer Lichtquelle, insbesondere an einem LED-Modul, und/oder an einer Treiberschaltung für die Lichtquelle entstehenden Wärme, aufweisend:
einen Trägereinsatz bestehend aus einer Trägerplatte mit einstückig angesetztem Kragen,
wobei die Trägerplatte, direkt oder indirekt, in wärmeleitfähigem Kontakt das LED-Modul trägt,
wobei an dem Kragen des Trägereinsatzes in Richtung des Sockels zur Wärmeabfuhr in flächigem Kontakt eine wärmeleitfähige Unterschale angebracht ist

Der Trägereinsatz kann aus einem hohe wärmeleitfähigen Material, das vorzugsweise mindestens 10W/mK Wärmeleitfähigkeit aufweist, gefertigt sein.

Der Trägereinsatz kann aus Metall, Kunststoff und/oder Keramik gebildet sein.

Die wärmeleitfähige Unterschale kann aus einer oder mehreren Schichten eines Kunststoffmaterials, Metalls und/oder Keramik bestehen.

Die Wärmeleitfähigkeit des Kunststoffmaterials, bspw. ein Polymer, oder der Keramik ist dabei vorzugsweise größer als 1 Watt/Meter Kelvin, vorzugsweise größer als 2 Watt/Meter Kelvin.

Die Unterschale kann aus einer inneren und einer äußeren Schicht bestehen, wobei die innere Schicht einen vollflächigen Kontakt mit zumindest einem Teil der äußeren Schicht herstellt.

Die äußere Schicht der Unterschale kann zumindest teilweise als Beschichtung auf die innere Schicht des unteren Schalenelements aufgebracht sein.

Die innere Schicht der Unterschale kann aus Metall, insbesondere aus Aluminium bestehen.

Die äußere Schicht der Unterschale kann aus einem elektrisch isolierenden Material bestehen.

Die innere Schicht und die äußere Schicht der Unterschale können als separate Teile ausgebildet sein.

Der ringförmige Bereich, in dem die Unterschale mit dem Kragen des Trägereinsatzes überlappt, kann eine Seitenhöhe von vorzugsweise mehr als 2mm, mehr bevorzugt größer als 3mm, aufwiesen.

Der Kragen des Trägereinsatzes kann in einem Rücksprung in der Innenseite der Unterschale aufgenommen sein, so dass die Innenfläche des Kragens des Trägereinsatzes plan abschließt mit der Innenseite des Bereichs der Unterschale mit größerer Wandstärke.

Ein weiterer Aspekt der Erfindung betrifft eine Retrofit LED-Lampe, aufweisend:
- wenigstens eine Kühlkörper-Anordnung nach einem der vorherigen Ansprüche,
- ein LED-Modul mit einem oder mehreren LED-Chips, eine Treiberschaltung zur Stromversorgung des LED-Moduls, sowie einen Sockel zum mechanischen wie elektrischem Kontakt mit einer Glühbirnenfassung, und
- eine transparent Oberschale, die in Lichtaustrahlrichtung des LED-Chips an dem Kragen des Trägereinsatzes und/oder an der Unterschale angebracht ist.

Die Unterschale und die Oberschale können ein das LED-Modul und den Trägereinsatz umschließendes Gehäuse der LED-Lampe bilden.

Die Unterschale und der Kragen des Trägereinsatzes können einen Hohlkörper bilden, in dem zumindest ein Teil der Treiberschaltung für das LED-Modul angeordnet ist.

Die äußere Schicht der Unterschale und die Oberschale können aus einem elektrisch isolierenden Material bestehen.

Die Unterschale kann die Treiberschaltung mit Abstand umgiben.

Die äußere Schicht der Unterschale und die Oberschale können eine Dicke von mindestens 100 µm, vorzugsweise von mindestens 200µm, noch bevorzugter von mindestens 500µm und am bevorzugten von mindestens 1000µm aufweisen.

Die äußere Schicht der Unterschale und die Oberschale können aus einem elektrisch isolierenden Material bestehen.

Zwischen der Treiberschaltung und der inneren Schicht der Unterschale kann eine elektrische Isolierung vorgesehen sein.

Die äußere Schicht der Unterschale kann zumindest teilweise als Beschichtung auf die innere Schicht des unteren Schalenelements aufgebracht sein.

Die äußere Schicht der Unterschale kann zumindest im Bereich von deren Unterteil eine geriffelte Form zur Erhöhung der Oberfläche aufweisen.

Der Lampensockel kann mit dem Unterteil der äußeren und/oder der inneren Schicht flächig verbunden sein, so dass eine hohe Wärmeabgabe von der inneren und/oder der äußeren Schicht gewährleistet ist.

Das LED-Modul kann mindestens ein RGB-LED-Modul und/oder mindestens eine leuchtstoffkonvertierte monochromatische LED mit mindestens einer monochromatischen LED aufweisen.

Die Treiberschaltung kann einen AC-DC-Wandler und/oder einen DC-DC-Wandler, insbesondere mit einem PWM-betriebenen Schalter, aufweisen.

Die LED-Lampe kann einen Lampensockel zur mechanischen und elektrischen Kontaktierung der LED-Lampe mit einer Lampenfassung aufweisen, wobei es sich bei dem Lampensockel um einen E14, E17 oder E27 Schraubsockel oder einen G4, G5 oder G6 Stiftsockel oder einen BA9 oder BA15 Bajonettsockel handelt.

Der Lampensockel kann mit dem Unterteil der äußeren und/oder der inneren Schicht der Unterschale flächig verbunden sein, so dass eine hohe Wärmeabgabe von der inneren und/oder der äußeren Schicht gewährleistet ist.

Weitere Vorteile, Eigenschaften und Merkmale der Erfindung sollen nunmehr bezugnehmend auf die Figuren der begleitenden Zeichnungen erläutert werden.

Es zeigen:
- Fig. 1a: eine erfindungsgemäße Ausführungsform einer Retrofit LED-Lampe in einer Explosionsansicht,
- Fig. 1b: die Ausführungsform von Fig.1a in zusammengebauter Weise, und
- Fig.2: eine weitere erfindungsgemäße Ausführungsform einer Retrofit LED-Lampe mit einteiliger Unterschale.

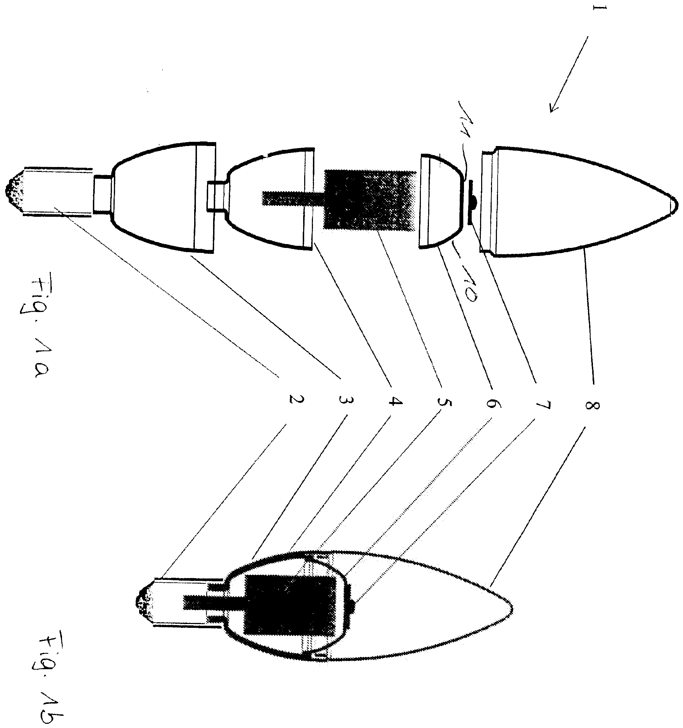

Fig. 1a und 1b zeigen eine erfindungsgemäße Ausführungsform einer LED-Lampe 1 mit einem LED-Modul 7. Dabei handelt es sich um eine Retrofit LED-Lampe 1 zum Einsatz in einer konventionellen Lampenfassung. Hierfür weist die Lampe 1 einen konventionellen Sockel 2, beispielsweise mit einem E14, E17 oder E27 Schraubgewinde auf. Alternativ ist auch ein Sockel denkbar, der für einen Niedervoltanschluss ausgelegt ist, wie ein G4, G5 oder G6 Stiftsockel. Auch denkbar ist ein BA9 oder BA15 Bajonettsockel.

Wenn die Retrofit LED-Lampe 1 durch eine entsprechende Lampenfassung mit Netzwechselspannung oder mit Niedervoltspannung versorgt wird, wird zum korrekten Betrieb des LED-Moduls 7 eine Stromanpassung benötigt. Hierfür ist eine Treiberschaltung 5 vorgesehen. Diese kann jeden für diesen Einsatz denkbaren Ansteuerschaltkreis aufweisen, wie er aus dem Stand der Technik bekannt ist. So ist beispielsweise an einen AC-DC-Wandler zur Gleichrichtung einer Netzwechselspannung zu denken. Vorteilhafterweise kann diesem ein DC-DC-Wandler oder anderer Konverter nachgeschaltet sein, der die Spannung oder den Strom oder die Leistung reduziert. Dabei kann ein Schalter eingesetzt werden, der mittels Pulsbreitenmodulation (PWM) geschaltet wird. auch ist an eine nachgeschaltete Strombegrenzungsschaltung, beispielsweise mittels einer Transistorschaltung, zu denken.

Das LED-Modul 7 kann eine oder mehrere LEDs und/oder OLEDs aufweisen. Dabei sind insbesondere leuchtstoffkonvertierte monochromatische z.B. blaue LEDs, RGB-LED-Module oder jedgliche Kombinationen davon einsetzbar. Bei den leuchtstoffkonvertierten LEDs handelt es sich insbesondere um mindestens eine blaue LED, bei denen durch Farbkonvertierungsmittel wie Leuchtstoff ein Teil des ausgestrahlten blauen Lichts in gelbes, bzw. grünlichgelbes Licht umgewandelt wird. Die Anwendung von leuchtstoffkonvertierten grünen und/oder grünlich weißen LEDs ist auch denkbar. Vorzugsweise werden noch zusätzlich eine oder mehrere rote LEDs (oder andere monochromatischen LEDs) eingesetzt, die zu einem höheren Farbwiedergabewert CRI führen und für ein wärmeres Licht sorgen. Die roten LEDs können dabei separat zu den Leuchtstoffstoffkonvertierten blauen LEDs angeordnet sein, oder sie können sich neben diesen befinden, sodaß ebenfalls ein Teil ihres ausgestrahlten roten Licht leuchtstoffkonvertiert wird.

Das LED-Modul kann als ein COB ("Chip-on-Board")-Modul realisiert werden.

Erfindungsgemäß sitzt das LED-Modul 7 nun auf einem Trägereinsatz 6, der Teil einer Kühlkörperanordnung ist. Somit sind das LED-Modul und der Trägereinsatz 6 flächig verbunden. Dabei ist der Trägereinsatz 6 in dem Bereich, in dem das LED-Modul anliegt, möglichst eben, womit der Trägereinsatz 6 und das LED-Modul 7 eine möglichst hohe Kontaktfläche aufweisen, d.h. dass sie vollflächig verbunden sind. Der Trägereinsatz 6 kann dabei aus einem Oberteil 6 und einem Unterteil 4 bestehen. Somit kann der Trägereinsatz 6 die Treiberschaltung 5 zumindest teilweise einschließen. Das Unterteil 4 weist vorteilhafter Weise eine Öffnung auf der Unterseite auf, wodurch die Treiberschaltung 5 hervorstehen kann oder durch welche ein Leiter hindurch ragen kann, der einen elektrischen Kontakt mit Stromversorgung herstellt. Das Oberteil 6 weist außerdem eine nach außen ausgewölbte Form auf, sodass sich auf ihrer Innenseite ausreichend Platz für die Treiberschaltung ergibt. Auf ihrer Außenseite, vorzugsweise in der Mitte der Auswölbung weist sie einen eben Bereich auf, auf dem das LED-Modul 7 angebracht ist. Das Oberteil 6 kann also eine in etwa halbkugelförmige Form aufweisen, die auf ihrer Oberseite abgeflacht ist. Das Ober- und Unterteil 6 und 4 sind möglichst flächig verbunden und weisen so eine Wärmeübertragung zwischen den Teilen sowie eine starke mechanische Fixierung auf. Hierfür kann als Verbindung ein Bajonettverschluss, ein Schraubgewinde oder eine lineare, konische oder abgestufte Verbindung verwendet werden. Auch ist denkbar, dass ein Teil in das andere clipartig eingefügt wird. Durch die zweiteilige Ausführung der inneren Schicht ist außerdem die Anbringung des LED-Moduls 7 auf dem Trägereinsatz 6 leichter durchzuführen, da hierfür die Oberseite separat von der Unterseite verwendet werden kann, auch kann die Treiberschaltung 5 leichter eingefügt werden. Die Oberseite 6 kann zusätzlich im Bereich des LED-Moduls optische Mittel aufweisen wie eine Kavität, in der das LED-Modul angebracht wird. Dabei ist es jedoch vorteilhaft, wenn das erzeugte Licht in einem großen Winkel austreten kann.

Der Trägereinsatz 6 kann aus einem gut wärmeleitfähigen Material wie Metall, bspw. Aluminium bestehen. Die Anwendung von Kunststoff, Keramik oder ihre beliebige Kombinationen sind auch denkbar.

Der Trägereinsatz 6 kann auf eine möglichst große Oberfläche mit dem Unterteil des Gehäuses (oder Unterschale) überlappen. Der Trägereinsatz 6 ist mindestens an seinem Kragen 10 in einer Länge L (in der seitlichen Ansicht von Figur 1a, 1b) von mindestens vorzugsweise 2mm mit mindestens der inneren Schicht des Unterteils in flächigem Kontakt.

Die Kühlkörperanordnung weist weiterhin eine äußere Schicht auf, die den Trägereinsatz umgibt, wobei die äußere Schicht eine möglichst grosse Oberfläche aufweist. Auch diese Schicht besteht aus einem Oberteil 8 und einem Unterteil 3. Diese sind vorzugsweise über ein Gewinde oder durch Verklebung verbindbar, wobei somit eine hohe mechanische Fixierung sowie eine hohe Wärmeübertragung durch eine große gemeinsame Oberfläche zwischen den Teilen gewährleistet ist. Die äußere Sicht besteht vorzugsweise aus einem nichtleitenden Material wie Kunststoff, bzw. zumindest aus einem wenig leitendem Material, das eine isolierende Eigenschaft aufweist. Darüber hinaus weist sie eine geringere Wärmeleitfähigkeit, auf als die innere Schicht.

Hieraus ergibt sich der vorteilhafte Effekt, dass Wärme von der Wärmequelle, d.h. vom LED-Modul und auch von der Treiberschaltung mittels der inneren Schicht schnell abtransportiert wird und dann von der äußeren Schicht aufgenommen wird. Für diesen Zweck liegen die innere- und die äußere Schicht zumindest teilweise bündig aneinander an. Dies ist im Ausführungsbeispiel von Fig. 1b bei den beiden Unterteilen 4 und 3 der Fall. Somit weisen beide Schichten eine möglichst große aneinander anliegende Oberfläche auf, und damit wird eine möglichst große Wärmeübertragung zwischen den beiden Schichten gewährleistet. Hierfür sind die beiden Unterteile 4 und 3 auch so geformt, dass sie möglichst ohne Luftspalt aneinander anliegen. Sie können beispielsweise eine konische Form mit geringen Toleranzen aufweisen. Auch ist denkbar, dass zur Erhöhung der aneinander anliegenden Oberflächen der äußeren und der inneren Schicht, die Schichten eine einander entsprechende, in sich greifende Struktur, wie Rippen oder Wellen aufweisen.

Zwischen den Oberteilen des Trägereinsatzes 6 und äußeren Schicht 8 besteht ein Raum, indem sich das LED-Modul befindet. Dieser Raum kann optische Mittel wie eine Linse aufweisen. Weiterhin ist es möglich, dass dieser Raum zumindest Teilweise gefüllt ist, beispielsweise mit einem transparenten Material, sodass ebenfalls eine Wärmeabgabe zwischen den beiden Oberteilen erfolgen kann.

Das Unterteil der äußeren Schicht ist so mit dem Lampensockel 2 verbunden, dass beide Teile eine große gemeinsame Oberfläche aufweisen. Somit wird eine hohe Wärmeübertragung zwischen der äußeren Schicht und dem Lampensockel sichergestellt.

Die äußere Schicht ist außerdem zumindest teilweise, insbesondere im Bereich des Oberteils 8, transluzent oder transparent, sodass das vom LED-Modul 7 erzeugte Licht hindurch scheint. Das Oberteil 8 kann zudem optische Eigenschaften wie eine Linse, Diffusorpartikel oder sonstiges aufweisen.

Die äußere Schicht weist eine Dicke von mindestens 100µm, vorzugsweise von mindestens 200µm und noch bevorzugter von mindestens 500µm, am bevorzugten jedoch von mindestens 1000µm auf.

Zwischen dem Trägereinsatz und der Treiberschaltung kann ein Spalt bestehen. Dieser kann mit Luft gefüllt sein. Auch ist denkbar, dass er mit einer Vergussmasse gefüllt sein. Dabei kann die Vergussmasse auch eine Verbindung aller Teile der Kühlanordnung, des Lampensockels 2, sowie der Treiberschaltung darstellen. Somit wird eine mechanische Fixierung sowie eine Wärmeübertragung zwischen den Teilen begünstigt.

Ein Kontakt zwischen dem Trägereinsatz und der äußeren Schicht kann auch darüber hergestellt werden, dass die äußere Schicht durch ein Moulding-Verfahren über dem metallischen Trägereinsatz aufgebracht wird. Eine mechanische Fixierung kann dabei über Standardverfahren hergestellt werden wie Rippen oder Kavitäten im Metall-Einsatz. Die äußere Schicht und der metallische Trägereinsatz können auch mittels eine Verbindungsmittels verbunden werden, wie Klebstoff, Schmierfett, Zement oder ein Elastomer.

Der Trägereinsatz kann auf seiner Innenoberfläche zumindest teilweise eine zusätzliche, dritte Schicht aufweisen. Diese weist isolierende Eigenschaften auf. Somit kann die Treiberschaltung vor Kurzschlüssen weiter geschützt werden. Dabei ist denkbar, dass diese isolierende Schicht im Bereich unterhalb des LED-Moduls eine Aussparung aufweist, sodass über die innere, leitende Schicht eine elektrische Verbindung zwischen Treiberschaltung und LED-Modul hergestellt werden kann. Denkbar ist jedoch auch, dass die dritte Schicht durchgehend ausgebildet ist und innere Schicht sowie die dritte Schicht im Bereich des LED-Moduls zu dessen Kontaktierung von Leitern durchbohrt werden.

In der vorausgegangen Ausführungsform wird also davon ausgegangen, dass der Trägereinsatz aus zwei zusammengesetzten Teilen mit hoher Wärmeleitfähigkeit besteht, z.B. Metallteilen 4, 6, wobei das Oberteil in thermischen Kontakt mit der LED-Platine steht. Ein zweites Unterteil 3 bildet die Rückseite einer kerzenförmigen Retrofit LED-Lampe und erstreckt sich bis zum Sockel der LED-Lampe. Nach außen ist das rückseitige Metallteil mit einem dünnen Kunststoffmaterial von beispielsweise 0,5mm beschichtet (umspritzt), das elektrisch isoliert.

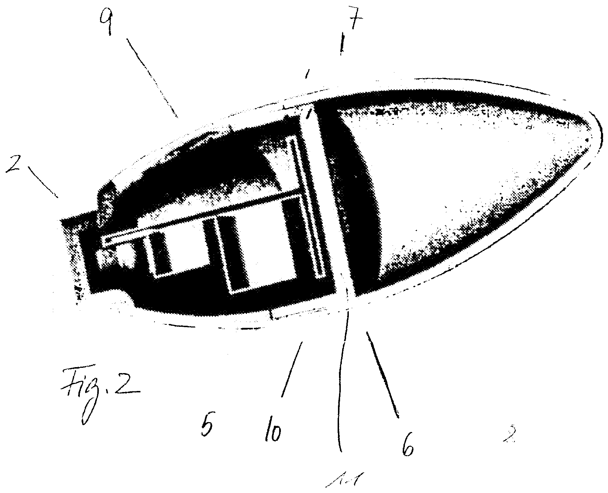

Im Unterschied dazu zeigt Fig. 2 eine weitere erfindungsgemäße Ausführungsform einer LED-Lampe, in der der Trägereinsatz 6 aus einem gut wärmeleitfähigen Material z.B. Metall, Keramik, Kunststoff besteht, das vorzugsweise mindestens 10W/mK Wärmeleitfähigkeit aufweist. Es handelt sich bei z.B. um einen metallischen Trägereinsatz 6 bestehend aus einer Trägerplatte 11 mit einem einstückig angesetzten Kragen 10, wobei die Trägerplatte 11 wieder in wärmeleitfähigen Kontakt das LED-Modul trägt.

Das rückseitige Teil, d.h. die Unterschale ist im Gegensatz zu dem mehrteiligen Aufbau von Figur 1 einteilig ausgebildet und kann bspw. aus einem wärmeleitfähigen Kunststoffmaterial, beispielsweise einem Polymer, oder einer Keramik bestehen. Materialien, die mindestens vorzugsweise 1W/mK, mehr bevorzugt mindestens 2W/mK, Wärmeleitfähigkeit beherrschen können in diesem Ausführungsbeispiel eingesetzt werden.

An dem Kragen 10 des Trägereinsatzes 6 ist dabei in Lichtaustrahlrichtung eine transparente Oberschale 8 und in Richtung des Sockels zur Wärmeabfuhr in flächigem Kontakt die wärmeleitfähige vorzugsweise einteilige Unterschale 9 angebracht, die zusammen ein das LED-Modul und den Trägereinsatz 6 umschliessendes Gehäuse der LED-Lampe bilden.

Dabei ist die Wandstärke der Unterschale in dem Bereich, in dem sie mit dem Kühlkörper 6, d. h. dessen Kragenbereich, überlappt und vollflächig in Kontakt steht, beispielsweise nur 2mm. Im dem Bereich der Unterschale, in dem keine Überlappung vorliegt, ist die Wandstärke größer, beispielsweise in einem Bereich von 3 bis 5mm.

Der größte Teil des Wärmeübergangs nach außen wird also im Bereich des Kragens des Trägereinsatzes durch den vollflächige Kontakt mit der Unterschale, die beispielsweise aus einem wärmeleitfähigen Kunststoffmaterial besteht, erfolgen.

Vorzugsweise ist der Kragen des Trägereinsatzes in einem Rücksprung in der Innenseite des wärmeleitfähigen Kunststoffmaterials aufgenommen, so dass die Innenfläche des Trägereinsatzes plan mit der Innenseite des Bereichs des wärmeleitfähigen Kunststoffmaterials mit größerer Wandstärke abschließt.

Da die Unterschale 9 aus Kunststoffmaterial und damit auch die Innenseite naturgemäß elektrisch isolierende Eigenschaften aufweist, kann die Treiberschaltung ohne weitere bauliche Veränderungen vor Kurzschlüssen geschützt werden.

Die weiteren Merkmale dieser Ausführungsform unterscheiden sich nicht von den Merkmalen der vorausgegangen Ausführungsform und werden deshalb nicht weiter beschrieben.

## Patentansprüche

1. Kühlkörper-Anordnung zur Ableitung der während des Betriebs an einer Lichtquelle, insbesondere an einem LED-Modul (7), und/oder an einer Treiberschaltung (5) für die Lichtquelle entstehenden Wärme, aufweisend:
einen Trägereinsatz (6) bestehend aus einer Trägerplatte (11) mit einstückig angesetztem Kragen (10), wobei die Trägerplatte in wärmeleitfähigem Kontakt das LED-Modul trägt, und
wobei zur Wärmeabfuhr an dem Kragen des Trägereinsatzes in flächigem Kontakt in Richtung des Sockels eine wärmeleitfähige Unterschale (4) angebracht ist, wobei die Unterschale aus einer inneren (4) und äußeren (3) Schicht besteht,
wobei die innere Schicht einen vollflächigen Kontakt mit zumindest einem Teil der äußeren Schicht herstellt,
**dadurch gekennzeichnet, dass**
die innere Schicht der Unterschale aus Metall, insbesondere aus Aluminium besteht, und die äußere Schicht der Unterschale aus einem elektrisch isolierenden Material besteht, und
die äußere Schicht der Unterschale zumindest teilweise als Beschichtung auf die innere Schicht der Unterschalte aufgebracht ist.

2. Kühlkörper-Anordnung nach Anspruch 1,
bei dem der Trägereinsatz aus einem gut
wärmeleitfähigen Material gefertigt ist, das
vorzugsweise mindestens lOW/mK Wärmeleitfähigkeit aufweist.

3. Kühlkörper-Anordnung nach Anspruch 1 oder 2,
bei dem der Trägereinsatz aus Metall, Kunststoff und/oder Keramik gebildet ist.

4. Kühlkörper-Anordnung nach einem der vorherigen Ansprüche,
bei dem die wärmeleitfähige Unterschale aus wenigstens einer Schicht eines Kunststoffmaterials wie bspw. einem Polymer, eines Metalls oder einer Keramik besteht.

5. Kühlkörper-Anordnung nach Anspruch 4, bei dem die Wärmeleitfähigkeit des Kunststoffmaterials oder Keramik grösser als 1 Watt/Meter Kelvin ist, vorzugsweise grösser als 2 Watt/Meter Kelvin ist.

6. Kühlkörper-Anordnung nach einem der vorherigen Ansprüche,
bei dem der ringförmige Bereich, in dem die Unterschale mit dem Kragen des Trägereinsatz überlappt, eine seitliche Höhe von vorzugsweise grösser als 2mm, mehr bevorzugt grösser als 3mm, ist.

7. Kühlkörper-Anordnung nach einem der vorherigen Ansprüche, bei dem der Kragen des Trägereinsatzes in einem
Rücksprung in der Innenseite der Unterschale
aufgenommen ist, so dass die Innenfläche des Kragens des Trägereinsatzes plan abschließt mit der Innenseite des Bereichs der Unterschale mit größerer Wandstärke.

8. Retrofit LED-Lampe aufweisend wenigstens eine Kühlkörper-Anordnung nach einem der vorherigen Ansprüche,
ein LED-Modul mit einem oder mehreren LED-Chips, eine Treiberschaltung zur Stromversorgung des LED-Moduls, sowie einen Sockel zum mechanischen wie elektrischem Kontakt mit einer Glühbirnenfassung, weiterhin aufweisend
eine transparent Oberschale, die in
Lichtaustrahlrichtung des LED-Chips an dem Kragen des Trägereinsatzes oder an der Unterschale angebracht ist.

9. Retrofit LED-Lampe nach Anspruch 8,
bei dem die Unterschale und die Oberschale ein das LED-Modul und den Trägereinsatz umschließendes Gehäuse der LED-Lampe bilden.

10. Retrofit LED-Lampe nach dem Anspruch 8 oder 9,
bei dem die Unterschale und der Kragen des
Trägereinsatzes einen Hohlkörper bildet, in dem
zumindest ein Teil der Treiberschaltung für das LED- Modul angeordnet ist.

11. Retrofit LED-Lampe nach einem der vorherigen Ansprüche 8 bis 10, bei dem die äussere Schicht der Unterschale und die Oberschale aus einem elektrisch isolierenden Material besteht.

12. Retrofit LED-Lampe nach einem der vorherigen Ansprüche 8 bis 11,
bei dem die Unterschale die Treiberschaltung mit Abstand umgibt.

13. Retrofit LED-Lampe nach einem der vorherigen Ansprüche 8 bis 12,
bei dem die äussere Schicht der Unterschale und die Oberschale eine Dicke von mindestens 100 µm, vorzugsweise von mindestens 200 µm, noch bevorzugter von mindestens 500 µm und am bevorzugten von mindestens 1000 µm aufweist.

14. Retrofit LED-Lampe nach einem der vorherigen Ansprüche 8 bis 13,
bei dem die äußere Schicht der Unterschale und die Oberschale aus einem elektrisch isolierenden Material besteht.

15. Retrofit LED-Lampe nach einem der vorherigen Ansprüche 8 bis 14,
bei dem zwischen der Treiberschaltung und der inneren Schicht der Unterschale eine elektrische Isolierung vorgesehen ist.

16. Retrofit LED-Lampe nach einem der vorherigen
Ansprüche 8 bis 15, bei dem die äußere Schicht der Unterschale zumindest teilweise als Beschichtung auf die innere Schicht des unteren Schalenelements aufgebracht ist.

17. Retrofit LED-Lampe nach einem der vorherigen Ansprüche 8 bis 16,
**dadurch gekennzeichnet,**
**dass** der Lampensockel mit dem Unterteil der äußeren und/oder der inneren Schicht flächig verbunden ist, so dass eine hohe Wärmeabgabe von der inneren und/oder der äußeren Schicht gewährleistet ist.

18. Retrofit LED-Lampe nach einem der vorherigen Ansprüche 8 bis 17,
bei dem das LED-Modul mindestens ein RGB-LED-Modul und/oder mindestens eine leuchtstoffkonvertierte monochromatische LED mit mindestens einer monochromatischen LED aufweist.

19. Retrofit LED-Lampe nach einem der vorherigen Ansprüche 8 bis 18,
bei dem die Treiberschaltung einen AC-DC-Wandler und/oder einen DC-DC-Wandle , insbesondere mit einem PWM-betriebenen Schalter, aufweist.

20. Retrofit LED-Lampe nach einem der vorherigen Ansprüche 8 bis 19,
bei dem die LED-Lampe einen Lampensockel zur mechanischen und elektrischen Kontaktierung der LED- Lampe mit einer Lampenfassung aufweist, wobei es sich bei dem Lampensockel um einen E14, E17 oder E27 Schraubsockel oder einen G4, G5 oder G6 Stiftsockel oder einen BA9 oder BA15 Bajonettsockel handelt.

21. Retrofit LED-Lampe nach einem der vorherigen Ansprüche 8 bis 20,
bei dem der Lampensockel mit dem Unterteil der äußeren und/oder der inneren Schicht der Unterschale flächig verbunden ist, so dass eine hohe Wärmeabgabe von der inneren und/oder der äußeren Schicht gewährleistet ist.

## Claims

1. A cooling body assembly for dissipating the heat produced during the operation on a light source, in particular on an LED module (7), and/or on a driver circuit (5) for the light source, having:
A carrier insert (6) consisting of a carrier plate (11) with an integrally attached collar (10), wherein the carrier plate carries the LED module in thermally-conductive contact, and
wherein a thermally-conductive lower shell (4) is arranged in the direction of the base for dissipating heat in flat contact, wherein the lower shell consists of an inner (4) and outer (3) layer, wherein the inner layer establishes a full-area contact with at least one part of the outer layer,
**characterized in that**
the inner layer of the lower shell consists of metal, in particular of aluminum, and the outer layer of the lower shell consists of an electrically insulating material, and
the outer layer of the lower shell is applied at least partially as a coating to the inner layer of the lower shell.

2. A cooling body assembly according to Claim 1,
wherein the carrier insert is made from a good thermally-conductive material, which preferably has at least 1OW/mK thermal conductivity.

3. A cooling body assembly according to Claim 1 or 2,
wherein the carrier insert is formed from metal, plastic and/or ceramic.

4. A cooling body assembly according to any one of the preceding claims,
wherein the thermally-conductive lower shell consists of at least one layer of a plastic material, such as, for example, a polymer, a metal or a ceramic.

5. A cooling body assembly according to Claim 4, wherein the thermal conductivity of the plastic material or ceramic is greater than 1 watt/meter kelvin, preferably greater than 2 watts/meter kelvin.

6. A cooling body assembly according to any one of the preceding claims,
wherein the annular region, in which the lower shell overlaps with the collar of the carrier insert, is a lateral height of preferably greater than 2 mm, more preferably greater than 3 mm.

7. A cooling body assembly according to any one of the preceding claims, wherein the collar of the carrier insert is accommodated in a set-back portion in the inside of the lower shell, so that the inner surface of the collar of the carrier insert is flush with the inside of the region of the lower shell with greater wall thickness.

8. A retrofit LED-lamp having at least one cooling body assembly according to any one of the preceding claims,
an LED module with one or several LED chips, a driver circuit for the power supply of the LED module, as well as a base for the mechanical and electrical contact with a light bulb socket,
further having
a transparent upper shell, which is arranged in the light emission direction of the LED chip on the collar of the carrier insert or on the lower shell.

9. A retrofit LED-lamp according to Claim 8,
wherein the lower shell and the upper shell form a housing of the LED-lamp surrounding the LED module and the carrier insert.

10. A retrofit LED-lamp according to Claim 8 or 9,
wherein the lower shell and the collar of the carrier insert forms a hollow body, in which at least one part of the driver circuit is arranged for the LED module.

11. A retrofit LED-lamp according to any one of the preceding Claims 8 to 10, wherein the outer layer of the upper shell and the lower shell consists of an electrically insulating material.

12. A retrofit LED-lamp according to any one of the preceding Claims 8 to 11,
wherein the lower shell surrounds the driver circuit at a distance.

13. A retrofit LED-lamp according to any one of the preceding Claims 8 to 12,
wherein the outer layer of the lower shell and the upper shell has a thickness of at least 100 µm, preferably of at least 200 µm, even more preferably of at least 500 µm and most preferably of at least 1000 µm.

14. A retrofit LED-lamp according to any one of the preceding Claims 8 to 13,
wherein the outer layer of the lower shell and the upper shell consists of an electrically insulating material.

15. A retrofit LED-lamp according to any one of the preceding Claims 8 to 14,
wherein an electrical insulation is provided between the driver circuit and the inner layer of the lower shell.

16. A retrofit LED-lamp according to any one of the preceding Claims 8 to 15, wherein the outer layer of the lower shell is applied at least partially as a coating to the inner layer of the lower shell element.

17. A retrofit LED-lamp according to any one of the preceding Claims 8 to 16,
**characterized in**
**that** the lamp base is connected in a planar manner to the lower part of the outer and/or the inner layer, so that a high heat emission is ensured from the inner and/or the outer layer.

18. A retrofit LED-lamp according to any one of the preceding Claims 8 to 17, wherein the ED module has at least one RGB-LED module and/or at least one luminescent substance-converted monochromatic LED with at least one monochromatic LED.

19. A retrofit LED-lamp according to any one of the preceding Claims 8 to 18, wherein the driver circuit has an AC-DC converter and/or a DC-DC converter, in particular with a PWM-operated switch.

20. A retrofit LED-lamp according to any one of the preceding Claims 8 to 19, wherein the LED lamp has a lamp base for the mechanical and electrical contacting of the LED-lamp with a lamp socket, in which the lamp base is a E14, E17 or E27 screw base or a G4, G5 or G6 pin base or a BA9 or BA15 bayonet base.

21. A retrofit LED-lamp according to any one of the preceding Claims 8 to 20, wherein the lamp base is connected in a planar manner to the lower part of the outer and/or the inner layer of the lower shell, so that a high heat emission is ensured from the inner and/or the outer layer.

## Revendications

1. Dispositif de radiateur pour l'évacuation de la chaleur dégagée pendant le fonctionnement au niveau d'une source de lumière, plus particulièrement d'un module à LED (7) ou d'un circuit pilote (5) pour la source de lumière, comprenant :
un insert de support (6) constitué d'une plaque de support (11) avec des collerettes (10) posées d'une seule pièce,
la plaque de support supportant le module à LED avec un contact de conduction thermique et
moyennant quoi, pour l'évacuation de la chaleur au niveau des collerettes de l'insert de support, est montée une coque inférieure thermoconductrice (4) en contact de surface en direction du socle,
la coque inférieure étant constituée d'une couche interne (4) et d'une couche externe (3),
la couche interne établissant un contact sur toute la surface avec au moins une partie de la couche externe,
**caractérisé en ce que**
la couche interne est constituée de métal, plus particulièrement d'aluminium et la couche externe de la coque inférieure est constituée d'un matériau électriquement isolant et
la couche externe de la coque inférieure est posée au moins partiellement sous la forme d'un revêtement sur la couche interne de la coque inférieure.

2. Dispositif de radiateur selon la revendication 1,
dans lequel l'insert de support est constitué d'un matériau présentant une bonne conductivité électrique, qui présente de préférence une conductivité thermique d'au moins 10 W/mK.

3. Dispositif de radiateur selon la revendication 1 ou 2,
dans lequel l'insert de support est constitué de métal, de matière plastique et/ou de céramique.

4. Dispositif de radiateur selon l'une des revendications précédentes,
dans lequel la coque inférieure thermoconductrice est constituée d'au moins une couche de matière plastique, par exemple d'un polymère, d'un métal ou d'une céramique.

5. Dispositif de radiateur selon la revendication 4, dans lequel la conductivité thermique de la matière plastique ou de la céramique est supérieure à 1 watt/mètre Kelvin, de préférence supérieure à 2 watts/mètre Kelvin.

6. Dispositif de radiateur selon l'une des revendications précédentes,
dans lequel la zone annulaire, dans laquelle la coque inférieure se superpose avec la collerette de l'insert de support présente une hauteur latérale de préférence supérieure à 2 mm, de préférence supérieure à 3 mm.

7. Dispositif de radiateur selon l'une des revendications précédentes,
dans lequel la collerette de l'insert de support est logée dans un renfoncement à l'intérieur de la coque inférieure, de façon à ce que la surface interne de la collerette de l'insert de support se termine en alignement avec l'intérieur de la zone de la coque inférieure avec l'épaisseur de paroi la plus importante.

8. Lampe LED à rétrofit comprenant au moins un dispositif de radiateur selon l'une des revendications précédentes, un module à LED avec une ou plusieurs puces à LED, un circuit pilote pour l'alimentation en courant du module à LED, ainsi qu'un socle pour le contact aussi bien mécanique qu'électrique avec une douille d'ampoule, comprenant en outre,
une coque supérieure transparente, qui est montée dans la direction d'émission de lumière de la puce à LED sur la collerette de l'insert de support ou sur la coque inférieure.

9. Lampe LED à rétrofit selon la revendication 8,
dans lequel la coque inférieure et la coque supérieure constituent un boîtier de la lampe LED entourant le module à LED et l'insert de support.

10. Lampe LED à rétrofit selon la revendication 8 ou 9,
dans lequel la coque inférieure et la collerette de l'insert de support forment une cavité dans laquelle au moins une partie du circuit pilote pour le module à LED est disposée.

11. Lampe LED à rétrofit selon l'une des revendications précédentes 8 à 10, dans laquelle la couche externe de la coque inférieure et la coque supérieure sont constituées d'un matériau électriquement isolant.

12. Lampe LED à rétrofit selon l'une des revendications précédentes 8 à 11, dans laquelle la coque inférieure entourant le circuit pilote avec une certaine distance.

13. Lampe LED à rétrofit selon l'une des revendications précédentes 8 à 12, dans laquelle la couche externe de la coque inférieure et la coque supérieure présentent une épaisseur d'au moins 100 µm, de préférence d'au moins 200 µm, de préférence d'au moins 500 µm et de préférence d'au moins 1000 µm.

14. Lampe LED à rétrofit selon l'une des revendications précédentes 8 à 13, dans laquelle la couche externe de la coque inférieure et la coque supérieure sont constituées d'un matériau électriquement isolant.

15. Lampe LED à rétrofit selon l'une des revendications précédentes 8 à 14, dans laquelle, entre le circuit pilote et la couche interne de la coque inférieure est prévue une isolation électrique.

16. Lampe LED à rétrofit selon l'une des revendications précédentes 8 à 15, dans laquelle la couche externe de la coque inférieure est montée au moins sous la forme d'un revêtement sur la couche interne de l'élément de coque inférieur.

17. Lampe LED à rétrofit selon l'une des revendications précédentes 8 à 16, dans laquelle le socle de lampe est relié avec la partie inférieure de la couche externe et/ou interne sur toute la surface, de façon à garantir un dégagement thermique élevé par la couche interne et/ou externe.

18. Lampe LED à rétrofit selon l'une des revendications précédentes 8 à 17, dans laquelle le module à LED comprend au moins un module à LED RVB et/ou au moins une LED monochromatique convertie en matière luminescente avec au moins une LED monochromatique.

19. Lampe LED à rétrofit selon l'une des revendications précédentes 8 à 18, dans laquelle le circuit pilote comprend au moins un convertisseur AC-DC et/u un convertisseur DC-DC, plus particulièrement avec un commutateur PWM.

20. Lampe LED à rétrofit selon l'une des revendications précédentes 8 à 19, dans laquelle la lampe LED comprend un socle de lampe pour la mise en contact mécanique et électrique de la lampe LED avec une douille de lampe, le socle de lampe étant un socle à vis E14, E17 ou E27 ou un socle à broches G4, G5 ou G6 ou un socle à baïonnette BA9 ou BA15.

21. Lampe LED à rétrofit selon l'une des revendications précédentes 8 à 20, dans laquelle le socle de lampe est relié sur toute la surface avec la partie inférieure de la couche externe et/ou la couche interne de la coque inférieure, de façon à garantir un dégagement thermique élevé par la couche interne et/ou externe.
